# EUROPEAN PATENT APPLICATION

(11) **EP 3 650 196 A1**
(43) Date of publication of application: **13.05.2020**
(21) Application number: 18204909.8
(22) Date of filing: 07.11.2018
(51) Int. Cl.: B29C 48/51, B29C 48/74, B29C 48/875, B29C 48/395, B29C 48/285, B29C 48/92, B29C 48/07, B29C 48/12

(54) **APPARATUS AND METHOD FOR MANUFACTURING ARTICLES MADE OF RECYCLED RUBBER**

(71) Applicant: De Maria, Giuseppe, 21040 Caronno, Varesino VA (IT)
(72) Inventor: De Maria, Giuseppe, 21040 Caronno, Varesino VA (IT)
(74) Representative: Modiano, Micaela Nadia

(57) **Abstract**

An apparatus (10) for manufacturing articles with recycled rubber and plant fibers, comprising a heating chamber (30a) in which a thermoplastic resin (T) is heated and melted, a mixing chamber (30b) in which the thermoplastic resin (T) is mixed with rubber granules (G) obtaining a mixed material (M), a cooling chamber (30c) which leads into the extrusion port (60) and an extrusion screw (40) adapted to convey the thermoplastic resin (T), the rubber granules (G) and the mixed material (M) toward the extrusion port (60);
the extrusion screw (40) comprises a stopping shoulder (41) which hermetically separates the heating chamber (30a) from the mixing chamber (30b) and at least one central duct (42) for the passage of the melted resin (T) from the heating chamber (30a) to the mixing chamber (30b), the central duct (42) leading into the mixing chamber (30b) so that the melted resin (T) sprays the rubber granules (G) from the inside.

## Description

The present invention relates to an apparatus and a method for manufacturing articles made of recycled rubber, particularly, but not exclusively, from used tires.

As is known, the manufacture of articles made of recycled rubber, in particular originating from old tires, has seen great development owing to the abundance and low cost of the raw material, as well as the environmental benefits that recycling entails.

In particular, the recycled rubber from used tires is very useful and practical for the manufacture of waterproof panels and mats or for acoustic and/or thermal insulation.

Conventional methods of manufacturing articles with recycled rubber usually entail a premixing of rubber granules and a thermoplastic resin, the amount of which is generally greater than 40% of the mixture, followed by a step of extrusion.

In this context, a known problem is that the rubber undergoes a degradation during the various stages of processing.

In particular, in the step of extrusion, the forces of friction on the rubber cause overheating phenomena which result in a degradation of the product.

Furthermore, the relatively high percentage of thermoplastic resin, in addition to penalizing costs, has a negative effect on the density of the manufactured article that is produced, negatively influencing, for example, the acoustic insulation characteristics.

In addition, conventional apparatuses for manufacturing articles made of recycled rubber are often complex and expensive to implement.

In order to overcome these drawbacks, methods have recently been developed that involve striking the recycled rubber granules with a jet of melted resin, so as to reduce the percentage of thermoplastic resin used. According to these conventional methods, the rubber granules pass inside a mixing chamber where they are sprayed by a jet of melted thermoplastic resin originating from outside. In this manner however, for example, the jet of thermoplastic resin cannot penetrate the flow of rubber granules fully and uniformly, and the result is a mixture that is rather uneven, with negative consequences on the quality of the end product.

The aim of the present invention is to overcome the above mentioned drawbacks of the known art, by devising a method and an apparatus for manufacturing articles with recycled rubber, which allow to drastically reduce the amount of thermoplastic resin that is mixed with the recycled rubber granules, thus obtaining a mixture that is uniform and of high quality.

Within this aim, an object of the present invention is to devise a method and an apparatus for manufacturing articles with recycled rubber, which prevent the occurrence of overheating phenomena that cause the degradation of the rubber.

Another object of the invention is to devise a method and an apparatus for manufacturing articles with recycled rubber which are capable of offering the widest guarantees of reliability and safety.

Another object of the invention is to devise a method and an apparatus for manufacturing articles with recycled rubber which are easy to implement and economically competitive when compared to the known art.

This aim and these and other objects which will become better apparent hereinafter are achieved by an apparatus for manufacturing articles with recycled rubber according to claim 1.

This aim and these and other objects which will become better apparent hereinafter are also achieved by a method for manufacturing articles made of recycled rubber according to claim 9.

Further characteristics and advantages of the invention will become better apparent from the detailed description of a preferred, but not exclusive, embodiment of an apparatus for manufacturing articles with recycled rubber according to the invention, which is illustrated by way of non-limiting example with the aid of the accompanying drawings wherein:
Figure 1 is a schematic view of the apparatus according to the invention;

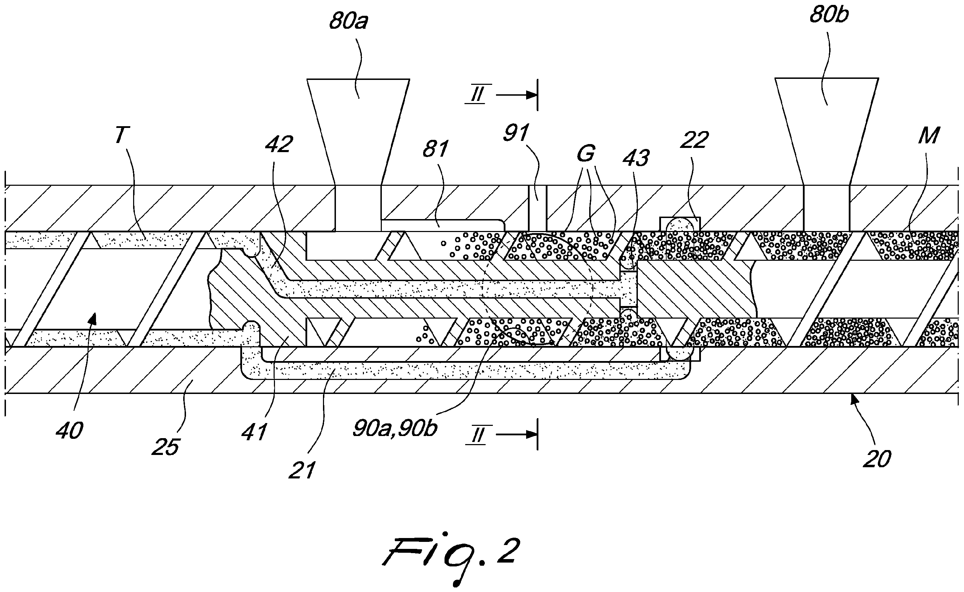

Figure 2 is an enlarged-scale cross-sectional view of a detail of the mixing chamber;
Figure 3 is a cross-sectional view taken along the line II-II in Figure 2.

With reference to the figures, the apparatus, generally designated with the reference numeral 10, comprises a hollow body 20 which extends longitudinally from a hopper 50 for introducing a thermoplastic resin T into an extrusion port 60.

The apparatus also comprises a calendering unit 70, downstream of the extrusion port 60, for the calendering of the extruded material. It should be noted that hereinafter the term "downstream" is used to mean further from the hopper 50 and, conversely, the term "upstream" means closer to the hopper 50.

The hollow body 20 comprises an axial cavity 30 defined by a wall 25 of the hollow body 20.

The axial cavity 30, in turn, comprises in succession and in mutual fluid communication: a heating chamber 30a in which the thermoplastic resin T is heated and melted; a mixing chamber 30b in which the thermoplastic resin T is mixed with rubber granules G introduced into the mixing chamber 30b by way of one or more feeding channels 90a, 90b thus obtaining a mixed material M; a cooling chamber 30c which leads into the extrusion port 60.

The rubber granules are mixed, prior to being introduced into the mixing chamber, with plant fibers, which give stability and which also absorb the odor of rubber which, for certain applications, would be highly unwanted.

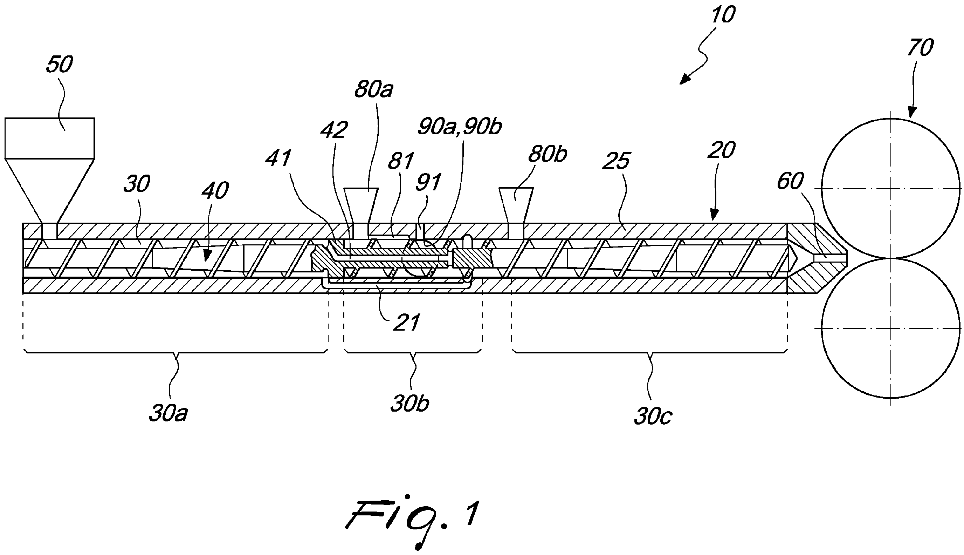

In other words, in the preferred embodiment shown, with particular reference to Figure 1, the axial cavity 30 is a substantially cylindrical cavity of which the first portion constitutes the heating chamber 30a, the second portion (i.e. the central portion) constitutes the mixing chamber 30b, and the third portion constitutes the cooling chamber 30b.

The heating chamber 30a is heated with a technique that is well-known in the sector, for example by way of electric heating devices (not shown), so that the resin T present inside is heated to a suitable temperature and melted.

The mixing chamber 30b is connected to one or more feeding channels 90a, 90b, through which the rubber granules G are introduced.

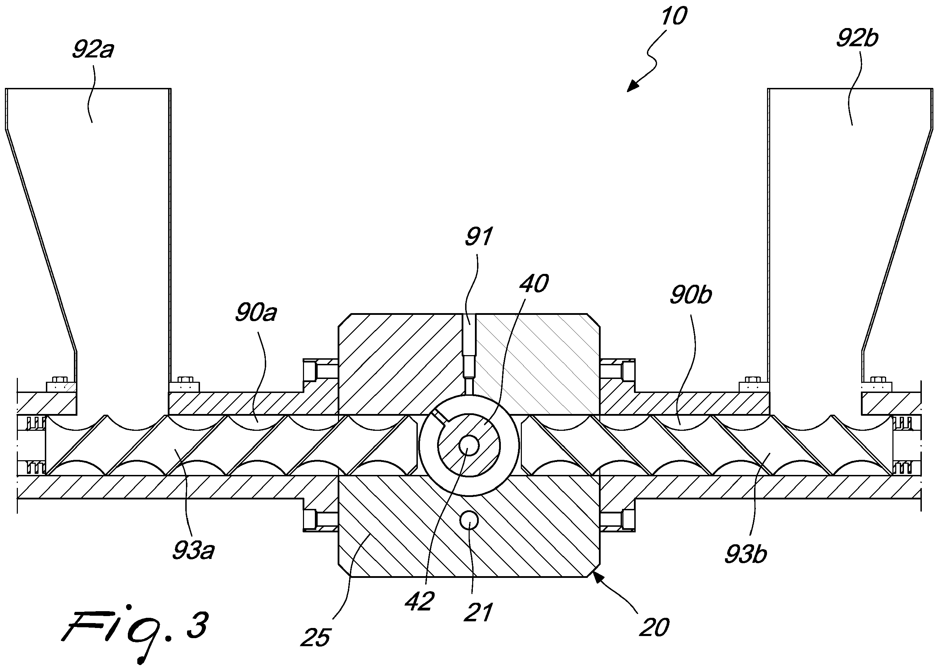

As shown in Figure 3, in the preferred embodiment, the feeding channels 90a, 90b are two in number, mutually coaxial and perpendicular to the axial cavity 30. Preferably, each feeding channel 90a, 90b is connected to a feeding hopper 92 for the convenient introduction of the rubber granules G.

Also in the example shown in Figure 3, inside each feeding channel 90 there is advantageously a feeding screw 93 which is adapted to convey the rubber granules G inside the mixing chamber 30b.

Preferably, the apparatus also comprises at least one auxiliary inlet 91 for introducing oil and/or adhesive and/or an additional polymer into the mixing chamber 30b.

The cooling chamber has a cooling device (not shown), the function of which is to lower the temperature to, and maintain it at, a value preferably comprised between 80°C and 140°C, and it ends with the extrusion port 60 from which the cooled mixture emerges.

The apparatus 10 further comprises an extrusion screw 40, which is accommodated inside the axial cavity 30 and is adapted to convey the thermoplastic resin T, the rubber granules G, and the mixed material M toward the extrusion port 60.

As shown in Figure 1, the extrusion screw 40 substantially engages the entire axial cavity 30, from the hopper 50 up until the inlet of the extrusion port 60, being coaxial thereto.

In more detail, the function of the extrusion screw 40 is to push the thermoplastic resin T from the hopper 50 through the heating chamber 30a and from the heating chamber 30a to the mixing chamber 30b, as well as to convey the mixed material M from the mixing chamber 30b to the cooling chamber 30c and from the cooling chamber 30c to the extrusion port 60.

According to the invention, the extrusion screw 40 comprises a stopping shoulder 41 which hermetically separates the heating chamber 30a from the mixing chamber 30b. In other words, the stopping shoulder 41 forms, between the heating chamber 30a and the mixing chamber 30b, an impermeable barrier to the melted thermoplastic resin T.

Also according to the invention, the extrusion screw 40 further comprises at least one central duct 42 for the passage of the melted resin T from the heating chamber 30a to the mixing chamber 30b. Such central duct 42 leads into the mixing chamber 30b so that the melted resin T sprays the rubber granules G from the inside (i.e. with one or more jets originating from a point situated inside the flow of the rubber granules G).

The inlet of the central duct 42 is located upstream of, or in any case at, the stopping shoulder 41.

In the preferred embodiment, there is one central duct 42 and it passes through the center of the extrusion screw 40, leading into the mixing chamber 30b downstream of the feeding channels 90a, 90b.

Preferably, the central duct 42 is connected to the mixing chamber 30b by way of one or more internal sprayers 43 which are arranged circumferentially on the extrusion screw 40 and are directed toward the wall 25 of the hollow body 20.

In practice, the melted resin T is pushed under pressure inside the central duct 42 and is introduced into the mixing chamber 30b, creating one or more jets, originating from the center of the mixing chamber 30b and directed toward the wall 25, which strike the rubber granules G from the inside. If present, the sprayers 43 have the advantage of creating a wider, more even jet.

Preferably, the apparatus 10 also comprises at least one peripheral duct 21, provided inside the wall 25, for the passage of the melted thermoplastic resin T from the heating chamber 30a to the mixing chamber 30b. Such peripheral duct 21 leads into in the mixing chamber 30b so that the melted resin T sprays the rubber granules G from the outside as well (i.e. with one or more jets originating from the outside of the flow of rubber granules G). The inlet of the peripheral duct 21 is also located upstream of the stopping shoulder 41.

Preferably, the peripheral duct 21 is connected to the mixing chamber 30b by way of one or more external sprayers 22 which are arranged circumferentially on the wall 25 of the hollow body 20 and are oriented toward the extrusion screw 40.

In practice, when there is also at least one peripheral duct 21, the melted resin T is pushed under pressure inside such peripheral duct 21 as well and is introduced into the mixing chamber 30b, thus also creating one or more jets originating from the wall 25 of the hollow body 20, which strike the rubber granules G from the outside.

In the preferred embodiment shown, the peripheral duct 21 leads into in the mixing chamber 30b downstream with respect to where the central duct 42 leads in, so that the spraying from inside of the rubber granules G occurs before the spraying from outside.

However, by modifying the points where the central duct 42 and the peripheral duct 21 lead in, it is possible to provide apparatuses in which the spraying from the outside occurs first, or in which the two sprayings occur in the same place.

The apparatus 10 according to the invention can also comprise one or more degassing vents 80a, 80b for the exit of gas from the axial cavity 30.

In the preferred embodiment, there are two degassing vents 80a, 80b: a first degassing vent 80a connected by way of an escape channel 81 to the mixing chamber 30b and a second degassing vent 80b connected directly to the cooling chamber 30c.

Operation of the apparatus 10 according to the invention is briefly described below.

The thermoplastic resin T, introduced into the hollow body 20 by way of the hopper 50, is conveyed by the extrusion screw 40 through the heating chamber 30a. During the passage in the heating chamber 30a, the thermoplastic resin T is subjected to heating until it ends up, melted, at the stopping shoulder 41.

The melted thermoplastic resin T is then pushed under pressure in the central duct 42 and, if present, in the peripheral duct 21, so being introduced into the mixing chamber 30b with a pressure preferably comprised between 150 and 200 bar. The melted thermoplastic resin T that emerges from the central duct 42 creates one or more centrifugal jets, while the melted resin T that emerges from the peripheral duct 21 creates one or more jets originating from the wall 25.

Simultaneously, by way of the feeding channels 90a, 90b, the rubber granules G with the plant fibers are introduced into the mixing chamber 30b, upstream with respect to the region of introduction of the melted thermoplastic resin T. The rubber granules G and the plant fibers are introduced substantially at atmospheric pressure and are made to advance, by the action of the extrusion screw 40, up until the region of introduction of the melted thermoplastic resin T, without undergoing any particular friction.

As it advances in the mixing chamber 30b, the rubber granules G are struck by the melted thermoplastic resin T, first from the inside by jets originating from the central duct 42 and then from the outside by jets originating from the peripheral duct 21. As already explained, different configurations are possible of the apparatus 10 in which the order is reversed or in which the inner spraying and the outer spraying occur simultaneously or even in which there are only jets originating from the inside.

In this manner the thermoplastic resin T coats the rubber granules G and the plant fibers as they pass, a mixture being obtained in this manner with a very low percentage of resin (assessable at around 15-22%) and very evenly distributed.

The impact of superficial wetting caused by the 20% of melted resin that emerges from the inside of the screw and from the outside of the peripheral duct 21 at the temperature of 220°C, combined with a mechanical stress created in the interspaces of the scoring present between the screw and the cylinder, create a thermal shock that comprehensively strikes the surface of the rubber granules for a few seconds, and makes it possibleto break the bonds between the macromolecular chains of the rubber, creating a "partial" superficial devulcanization that favors the adhesion of the polymer.

It should be noted furthermore that, since the rubber granules G are at atmospheric pressure and any particular friction is avoided, this guards against the overheating phenomena that are a cause of degradation of the material.

Also under the action of the extrusion screw 40, the mixed material M obtained passes through the cooling chamber 30c, inside which it is cooled to a value preferably comprised between 110 and 140°C.

The "partial" superficial devulcanization makes it possible to obtain, for the same percentages of components, an increase in the mechanical characteristics of the end product of approximately 20-25%.

The mixed material M is then pushed through the extrusion port 60 and can be finally calendered in order to obtain, for example, contoured plates.

The low percentage of resin makes it possible to obtain a product that is characterized by a low rigidity and a low density, characteristics that are very advantageous in use as an insulation material.

Obviously, the extrusion screw 40 can be actuated by any motor device, which has not been described since it is a well-known technique.

In practice it has been found that the apparatus for manufacturing articles with recycled rubber, and the method of manufacture according to the present invention, achieve the intended aim and objects in that they make it possible to drastically reduce the amount of thermoplastic resin that is mixed with the recycled rubber granules, thus obtaining a mixture that is uniform and of high quality.

Another advantage of the method and of the apparatus, according to the invention, consists in that they prevent the occurrence of overheating phenomena that cause the degradation of the rubber.

Another advantage of the method and of the apparatus, according to the invention, consists in that they offer the widest guarantees of reliability and safety in use.

Another advantage of the method and of the apparatus, according to the invention, consists in that they are easy to implement and economically competitive when compared to the known art.

The apparatus for manufacturing articles with recycled rubber thus conceived is susceptible of numerous modifications and variations all of which are within the scope of the appended claims.

Moreover, all the details may be substituted by other, technically equivalent elements.

In practice the materials employed, provided they are compatible with the specific use, and the contingent dimensions and shapes, may be any according to requirements and to the state of the art.

In conclusion, the scope of protection of the claims shall not be limited by the explanations or by the preferred embodiments illustrated in the description by way of examples, but rather the claims shall comprise all the patentable characteristics of novelty that reside in the present invention, including all the characteristics that would be considered as equivalent by the person skilled in the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An apparatus (10) for manufacturing articles with recycled rubber and plant fibers, comprising:
- a hollow body (20), which extends longitudinally from a hopper (50) for introducing a thermoplastic resin (T) into an extrusion port (60), which comprises an axial cavity (30) defined by a wall (25) of said hollow body (20); said axial cavity (30) comprising, in succession and in mutual fluid communication: a heating chamber (30a), in which said thermoplastic resin (T) is heated and melted, a mixing chamber (30b), in which said thermoplastic resin (T) is mixed with rubber granules (G), obtaining a mixed material (M), and a cooling chamber (30c), which leads into said extrusion port (60);
- an extrusion screw (40), which is accommodated inside said axial cavity (30) and is adapted to convey said thermoplastic resin (T), said rubber granules (G) and said mixed material (M) toward the extrusion port (60);
**characterized in that** said rubber granules are mixed with plant fibers and **in that** said extrusion screw (40) comprises a stopping shoulder (41) which hermetically separates said heating chamber (30a) from said mixing chamber (30b) and at least one central duct (42) for the passage of said melted resin (T) from said heating chamber (30a) to said mixing chamber (30b); said at least one central duct (42) leading into said mixing chamber (30b) so that said melted resin (T) sprays said rubber granules (G) from the inside.

2. The apparatus (10) according to claim 1, **characterized in that** said at least one central duct (42) is connected to said mixing chamber (30b) by way of one or more internal sprayers (43) which are arranged circumferentially on said extrusion screw (40) and are directed toward said wall (25).

3. The apparatus (10) according to claims 1 or 2, **characterized in that** it further comprises at least one peripheral duct (21), provided inside said wall (25), for the passage of said melted resin (T) from said heating chamber (30a) to said mixing chamber (30b); said at least one peripheral duct (21) leading into said mixing chamber (30b) so that said melted resin (T) sprays said rubber granules (G) from the outside as well.

4. The apparatus (10) according to claim 3, **characterized in that** said at least one peripheral duct (21) is connected to said mixing chamber (30b) by way of one or more external sprayers (22) which are arranged circumferentially on said wall (25) and are oriented toward said extrusion screw (40).

5. The apparatus (10) according to claims 3 or 4, **characterized in that** said peripheral duct (21) leads into said mixing chamber (30b) downstream with respect to where said central duct (42) leads in.

6. The apparatus (10) according to one or more of the preceding claims, **characterized in that** it comprises one or more degassing vents (80a, 80b) for the exit of gas from said axial cavity (30).

7. The apparatus (10) according to one or more of the preceding claims, **characterized in that** it further comprises at least one auxiliary inlet (91) for introducing oil and/or adhesive and/or an additional polymer into said mixing chamber (30b).

8. The apparatus (10) according to one or more of the preceding claims, **characterized in that** it comprises a calendering unit (70) downstream of said extrusion port (60).

9. A method for manufacturing articles made of recycled rubber, **characterized in that** it comprises at least the steps of:
a) introducing rubber granules (G) into a mixing chamber (30b) with a pressure value proximate to atmospheric pressure, in combination with plant fibers;
b) striking said granules (G) with plant fibers from the inside with one or more jets of melted pressurized thermoplastic resin (T) which arrive from the center of said mixing chamber (30b);
c) introducing the obtained mixed material (M) into a cooling chamber (30c) at a temperature comprised between 110°C and 140°C;
d) conveying said cooled mixed material (M) toward an extrusion port (60).

10. The method according to claim 9, **characterized in that** it comprises, between step b) and step c), the additional step of:
b2) striking said granules (G) with plant fibers from the outside with one or more jets of melted pressurized thermoplastic resin (T) which arrive from the wall (25) of said mixing chamber (30b).

11. The method according to claim 9 or 10, **characterized in that** it provides, downstream of said extrusion port (60), a step of calendering the extruded material.

12. The method according to one or more of claims 9 to 11, **characterized in that** said melted thermoplastic resin (T) is introduced into said mixing chamber (30b) at a pressure comprised between 150 and 200 bar.

13. The method according to one or more of claims 9 to 12, **characterized in that** said one or more jets of melted pressurized thermoplastic resin (T) create a thermal shock paired with a mechanical stress that creates a partial superficial devulcanization adapted to favor the adhesion of said thermoplastic resin.

14. The method according to one or more of claims 9 to 13, **characterized in that** it is provided in an apparatus (10) according to one or more of claims 1 to 8.

15. A recycled rubber article, **characterized in that** it is provided by way of a method according to one or more of claims 9 to 14.
